# DEMANDE DE BREVET EUROPEEN

(11) **EP 4 679 684 A1**
(43) Date de publication de la demande: **14.01.2026**
(21) Numéro de dépôt: 25187440.0
(22) Date de dépôt: 04.07.2025
(51) Int. Cl.: H02K 11/20

(54) **DISPOSITIF ET PROCÉDÉ DE PROTECTION CONTRE UN DÉFAUT DANS UN MOTEUR ÉLECTRIQUE**

(30) Priorité: 12.07.2024 FR 2407654
(71) Demandeur: Safran Electrical & Power, 31702 Blagnac (FR)
(72) Inventeur: CHAPERON, Vincent, 77550 MOISSY-CRAMAYEL (FR); GUILLARD, Eric, 77550 MOISSY-CRAMAYEL (FR)
(74) Mandataire: Santarelli

(57) **Abrégé**

Un système de protection (1) contre un défaut électrique dans un stator (90) d'un moteur comprend un premier groupe (81) de spires (815) à une première extrémité longitudinale (91) du stator (90) et un second groupe (82) de spires (825) à une seconde extrémité longitudinale (92) du stator (90). Le système (1) comporte au moins une fibre optique (10, 20) dépourvue de gaine opaque qui est positionnée à proximité des spires (815, 825) de l'un des groupes (81, 82), un premier déflecteur (31) (respectivement second déflecteur (32)) connecté à une première extrémité (11, 21) (respectivement seconde extrémité (12, 22)) de la fibre optique (10, 20), un capteur (40) connecté aux déflecteurs (31, 32) et une unité de commande (50) connectée au capteur (40) et qui est apte à couper l'alimentation du moteur lorsque la fibre optique (10, 20) détecte une lumière provenant de l'un des groupes (81, 82).

## Description

Dans certaines applications, par exemple dans des aéronefs à propulsion électrique ou hybride électrique thermique, on utilise des moteurs électriques à aimants permanents qui opèrent à des tensions élevées de courant continu, par exemple supérieures à 400 Volts.

Il est nécessaire de détecter les courts-circuits ou arcs électriques qui résultent d'un défaut dans un tel moteur. Ce défaut électrique peut être un défaut d'arc entre deux enroulements (défaut de spires de rebouclage) d'une même phase dans le stator du moteur. Un tel défaut est difficilement détectable électriquement car il est localisé entre deux spires d'une même phase.

La présente invention concerne un système de protection contre un défaut électrique dans un stator d'un moteur qui s'étend selon un axe longitudinal X avec une première extrémité longitudinale et une seconde extrémité longitudinale et qui comprend un premier groupe de spires de rebouclage à la première extrémité longitudinale et un second groupe de spires de rebouclage à la seconde extrémité longitudinale.

Pour une détection fiable et rapide d'un défaut dans le stator d'un moteur, il est nécessaire d'utiliser un dispositif de suivi (monitoring) avec une électronique déportée qui est conséquente en termes de calculs et d'algorithmes complexes (tels que par exemple une analyse spectrale, une analyse fréquentielle, une analyse du vecteur de Park des tensions, des flux et des courants), ce qui n'est pas pratique. Il existe d'autres dispositifs plus simples de détection de défaut de spires, tel que la détection de l'échauffement multiple généré par ce défaut, ou la détection d'un saut de courant entre deux étoiles dans le cas d'un moteur qui possède deux étoiles triphasées agissant toutes les deux sur la rotation du rotor (en effet les deux étoiles consomment alors la même puissance, et un défaut sur une branche d'une des étoiles fera nécessairement apparaitre un déséquilibre de courant entre les deux étoiles). Cependant, ces derniers dispositifs présentent l'inconvénient qu'un échauffement ou un saut de courant ne sont détectables qu'après une dégradation déjà importante des enroulements, c'est-à-dire une dégradation importante du moteur, ce qui est indésirable.

### Description de l'invention

La présente invention vise à remédier à ces inconvénients.

L'invention vise à proposer un système de protection contre un défaut électrique de spires de stator dans un moteur électrique, ce système devant permettre une détection rapide et fiable de ce défaut et l'interruption du moteur.

Ce but est atteint grâce au fait que le système comporte au moins une fibre optique qui est dépourvue de gaine opaque et qui est positionnée à proximité de toutes les spires de l'un des groupes de spires, un premier déflecteur qui est connecté à une première extrémité de la fibre optique, un second déflecteur qui est connecté à une seconde extrémité de la fibre optique, un capteur qui est connecté aux déflecteurs et une unité de commande qui est connectée au capteur et qui est apte à couper l'alimentation du moteur lorsque la fibre optique reçoit une lumière provenant de l'un des groupes.

Grâce à ces dispositions, et étant donné qu'un défaut dans un groupe de spires génère immédiatement un flash lumineux, le système de détection est apte à couper le moteur dès l'apparition du défaut, avant un endommagement important du moteur. De plus, la transmission d'information, à savoir la lumière, par fibre optique contribue à la fiabilité du système.

Avantageusement, le système comprend une première fibre optique qui est positionnée à proximité de toutes les spires du premier groupe et une seconde fibre optique qui est positionnée à proximité de toutes les spires du second groupe.

Avantageusement, la au moins une fibre optique est située en regard de l'extrémité longitudinale du groupe de spires.

Avantageusement, la au moins une fibre optique s'étend le long de la périphérie radialement externe du groupe de spires.

Avantageusement, la au moins une fibre optique s'étend le long de la périphérie radialement interne du groupe de spires.

Avantageusement, la au moins une fibre optique est munie d'une gaine transparente.

L'invention concerne également un procédé de protection contre un défaut électrique dans un stator d'un moteur qui s'étend selon un axe longitudinal X avec une première extrémité longitudinale et une seconde extrémité longitudinale et qui comprend un premier groupe de spires de rebouclage à la première extrémité longitudinale et un second groupe de spires de rebouclage à la seconde extrémité longitudinale.

Selon l'invention, le procédé comprend les étapes suivantes
(a) on positionne une fibre optique à proximité de toutes les spires de l'un des groupes de spires, la fibre optique étant dépourvue de gaine opaque;
(b) on connecte un premier déflecteur à une première extrémité de la fibre optique et on connecte un second déflecteur à une seconde extrémité de la fibre optique ;
(c) on connecte un capteur aux déflecteurs et à une unité de commande ;
(d) on coupe l'alimentation du moteur au moyen de la unité de commande lorsque la une fibre optique reçoit une lumière provenant de l'un des groupes.

Avantageusement, à l'étape (a) on positionne une première fibre optique à proximité de toutes les spires du premier groupe et on positionne une seconde fibre optique à proximité de toutes les spires du second groupe.

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
[Fig. 1] La figure 1 est une vue en perspective d'un stator d'un moteur électrique et d'un système de détection selon l'invention d'un défaut électrique dans ce moteur.
[Fig. 2] La figure 2 est une vue longitudinale d'un autre mode de réalisation d'un système de détection selon l'invention.
[Fig. 3] La figure 3 est une vue en perspective d'une variante de réalisation d'un système de détection selon l'invention.
[Fig. 4] La figure 4 est une vue en perspective d'une autre variante de réalisation d'un système de détection selon l'invention.

### Description détaillée de l'invention

A titre d'exemple, on décrit l'invention dans le cas d'un réseau électrique dans un aéronef. Un moteur électrique d'un tel réseau électrique comprend un stator 90 qui s'étend longitudinalement selon un axe longitudinal X qui est son axe de rotation. Par exemple le moteur est refroidi par air ou par un liquide. Dans la description ci-dessous, les termes « interne » et « intérieur » désignent un élément orienté vers l'axe longitudinal X ou disposé plus près de cet axe. Les termes « externe » et « extérieur » désignent un élément orienté en direction opposée de l'axe longitudinal X ou disposé plus loin de cet axe. Le terme « radial » désigne une position ou une direction dans un plan transversal perpendiculaire à l'axe longitudinal X.

Le stator 90 présente un élément central 93 annulaire, une première extrémité longitudinale 91 et une seconde extrémité longitudinale 92 qui est située longitudinalement à l'opposé de la première extrémité longitudinale 91. La première extrémité longitudinale 91 comprend un premier groupe 81 de spires 815 de rebouclage qui forment un anneau qui prolonge longitudinalement l'élément central 93. La seconde extrémité longitudinale 92 comprend un second groupe 82 de spires 825 de rebouclage qui forment un anneau qui prolonge longitudinalement l'élément central 93. Les spires de rebouclage (815, 825) désignent des spires qui sortent d'une cavité de l'élément central 93 et forment chacune une boucle avant de rentrer dans une autre cavité de l'élément central 93.

Le système 1 de protection comporte au moins une fibre optique (10, 20) qui est positionnée à proximité soit de toutes les spires 815 du premier groupe 81, soit de toutes les spires 825 du second groupe 82. Le terme « à proximité » signifie que la fibre optique (10, 20) est en contact avec le groupe (81, 82) ou presque en contact avec le groupe (81, 82), par exemple à une distance du groupe (10, 20) qui est de l'ordre de grandeur du diamètre de la fibre optique (10, 20). La fibre optique (10, 20) est dépourvue de gaine opaque à la lumière visible de telle sorte que sa surface latérale est apte à recevoir la lumière émise par la survenance d'un défaut entre des spires (815, 825), ce défaut étant par exemple un court-circuit ou arc électrique entre des spires (815, 825). Avantageusement, la fibre optique (10, 20) est dépourvue de gaine, ce qui simplifie la fabrication du système 1 de protection. Alternativement, la fibre optique (10, 20) est munie d'une gaine transparente à la lumière visible, ce qui permet de protéger la fibre optique (10, 20) contre des endommagements mécaniques (chocs) ou thermiques et/ou d'amplifier la captation lumineuse.

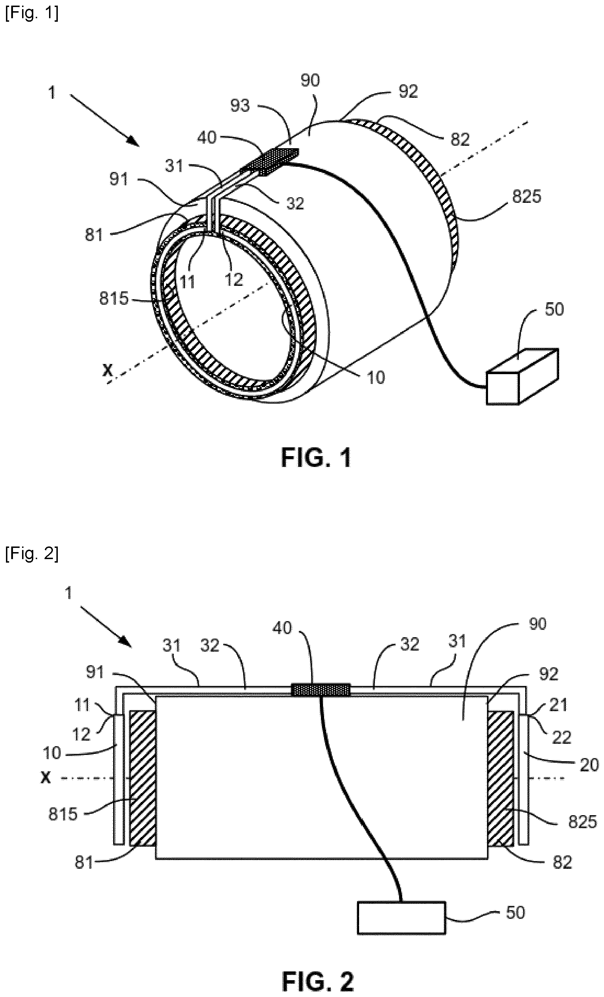

La figure 1 est une vue en perspective du stator 90 d'un moteur où une première fibre optique 10 est positionnée à proximité du premier groupe 81. La situation est similaire dans le cas où une seconde fibre optique 20 est positionnée à proximité du second groupe 82. La fibre optique (10, 20) forme un anneau qui se situe en regard de l'extrémité longitudinale du groupe (81, 82) de spires au niveau duquel elle est positionnée. En d'autres termes, la fibre optique (10, 20) se situe dans le prolongement longitudinal de ce groupe (81, 82).

L'anneau formé par la fibre optique (10, 20) est fendu de telle sorte qu'il présente deux extrémités (11, 12, 21, 22) en regard. Le système de protection 1 comprend un premier déflecteur 31 qui est connecté à une première extrémité 11 de la première fibre optique 10 (respectivement à une première extrémité 21 de la seconde fibre optique 20). Le système de protection 1 comprend un second déflecteur 32 qui est connecté à une seconde extrémité 12 de la première fibre optique 10 (respectivement à une seconde extrémité 22 de la seconde fibre optique 20). Avantageusement, le second déflecteur 32 sert pour un test automatique en émission. Ainsi, le système 1 peut être testé à l'allumage (PBIT « *Power-on Built-In Test* ») ou en continu durant le fonctionnement (CBIT « *Continuous Built-In Test* »). Ceci permet de vérifier que le système 1 est opérationnel sur toute la durée d'utilisation du moteur.

Dans un premier mode de réalisation de l'invention illustré en figure 1, le système de protection 1 comprend soit une fibre optique (10, 20) au niveau de l'un ou l'autre des groupes (81, 82) de spires (815, 825). Dans un deuxième mode de réalisation, illustré en figure 2 dans une vue longitudinale, le système de protection 1 comprend une première fibre optique 10 qui est positionnée au niveau (c'est à dire à proximité) du premier groupe 81 et une seconde fibre optique 20 est positionnée au niveau du second groupe 82. Ainsi, la détection d'un défaut est effective dans toutes les spires (815, 825) du stator, et un endommagement du moteur est donc plus efficacement évité.

Le système 1 de protection comprend un capteur 40 qui est connecté aux déflecteurs (31, 32). Lorsqu'il y a deux fibres optiques (10, 20), chacune des fibres optiques (10, 20) est connectée au capteur 40 par une paire distincte de déflecteurs (31, 32). Le capteur 40 est apte à capter une lumière initialement émise par un défaut dans un groupe (81, 82) de spires (815, 825) et qui circule dans une des fibres optiques (10, 20) puis dans les déflecteurs (31, 32).

Le système 1 de protection comprend une unité de commande 50 qui est connectée au capteur 40. La connexion entre le capteur 40 et l'unité de commande 50 est représentée schématiquement en figures 1 et 2. L'unité de commande 50 est apte à couper l'alimentation du moteur lorsqu'il reçoit un signal du capteur 40, ce signal étant émis lorsqu'au moins une des fibres optiques (10, 20) reçoit une lumière provenant de l'un des groupes (81, 82). Ainsi, le système 1 permet d'arrêter le moteur dès la survenance d'un défaut inter-spires dans le stator, de façon la plus rapide et efficace.

Le système 1 de protection est fiable car le moteur est situé dans un boitier fermé de telle sorte que l'obscurité règne dans ce boitier (non représenté). Ainsi, un flash lumineux émise par l'un ou l'autre des groupes (81, 82) de spires (815, 825) est aisément détectable.

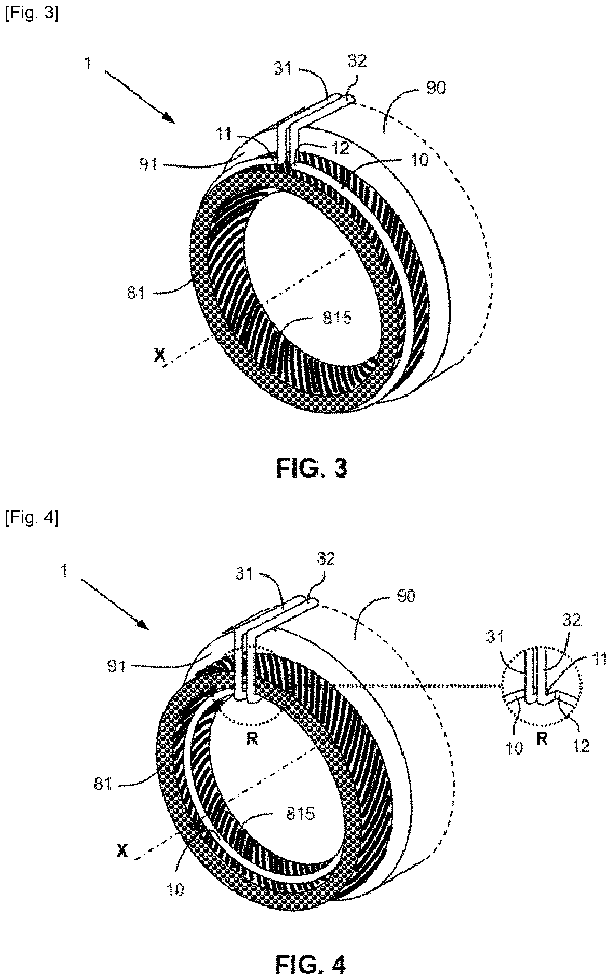

La figure 3 est une vue en perspective de la première extrémité longitudinale 91 du stator 90 qui illustre une variante du système 1 de protection. La première fibre optique 10 est positionnée autour du premier groupe 81, c'est-à-dire que la première fibre optique 10 s'étend à proximité et le long de la périphérie radialement externe du premier groupe 81 de spires 815. De la même façon, dans le deuxième mode de réalisation, la seconde fibre optique 20 est positionnée autour du second groupe 82, c'est-à-dire que la seconde fibre optique 20 s'étend le long de la périphérie radialement externe du second groupe 82 de spires 825.

La figure 4 est une vue en perspective de la première extrémité longitudinale 91 du stator 90 qui illustre une autre variante du système 1 de protection. La première fibre optique 10 est positionnée à l'intérieur et contre le premier groupe 81, c'est-à-dire que la première fibre optique 10 s'étend à proximité et le long de la périphérie radialement interne du premier groupe 81 de spires 815. De la même façon, dans le deuxième mode de réalisation, la seconde fibre optique 20 est positionnée à l'intérieur et contre le second groupe 82, c'est-à-dire que la seconde fibre optique 20 s'étend le long de la périphérie radialement interne du second groupe 82 de spires 825. La région R de la figure 4 au niveau de l'extrémité longitudinale 91 est dupliquée à droite avec uniquement la première fibre optique 10, le premier déflecteur 31 et le second déflecteur 32 afin de montrer la connexion entre le premier déflecteur 31 et la première extrémité 11 de la première fibre optique 10, et la connexion entre le second déflecteur 32 et la seconde extrémité 12 de la première fibre optique 10.

L'invention concerne également un procédé de protection contre un défaut électrique dans un moteur comportant un stator 90 tel que décrit ci-dessus. Dans une étape (a), on positionne une fibre optique (10, 20) à proximité de toutes les spires (815, 825) de l'un des groupes (81, 82) de spires (815, 825), la fibre optique étant dépourvue de gaine opaque. Dans une étape (b), on connecte un premier déflecteur 31 à une première extrémité (11, 21) de la fibre optique (10, 20) et on connecte un second déflecteur 32 à une seconde extrémité (12, 22) de la fibre optique (10, 20). Dans une étape (c) on connecte un capteur 40 aux déflecteurs (31, 32) et à une unité de commande 50. Dans une étape (d), on coupe l'alimentation du moteur au moyen de l'unité de commande 50 lorsque la fibre optique (10, 20) détecte une lumière provenant de l'un des groupes (81, 82), que cette lumière est captée par le capteur 40 et qu'un signal est alors envoyé par le capteur 40 jusqu'à l'unité de commande 50. Les étapes (a), (b), et (c) peuvent être dans n'importe quel ordre.

Dans le second mode de réalisation, à l'étape (a), on positionne une première fibre optique 10 à proximité de toutes les spires 815 du premier groupe 81 et on positionne une seconde fibre optique 20 à proximité de toutes les spires 825 du second groupe 82.

## Revendications

1. Système de protection (1) contre un défaut électrique dans un stator (90) d'un moteur qui s'étend selon un axe de rotation (X) avec une première extrémité longitudinale (91) et une seconde extrémité longitudinale (92) et qui comprend un premier groupe (81) de spires (815) de rebouclage à ladite première extrémité longitudinale (91) et un second groupe (82) de spires (825) de rebouclage à ladite seconde extrémité longitudinale (92), ledit système (1) étant **caractérisé en ce qu'**il comporte au moins une fibre optique (10, 20) qui est dépourvue de gaine opaque et qui est positionnée à proximité de toutes les spires (815, 825) de l'un desdits groupes (81, 82) de spires (815, 825), un premier déflecteur (31) qui est connecté à une première extrémité (11, 21) de ladite fibre optique (10, 20), un second déflecteur (32) qui est connecté à une seconde extrémité (12, 22) de ladite fibre optique (10, 20), un capteur (40) qui est connecté auxdits déflecteurs (31, 32) et une unité de commande (50) qui est connectée audit capteur (40) et qui est apte à couper l'alimentation dudit moteur lorsque ladite au moins une fibre optique (10, 20) reçoit une lumière provenant de l'un desdits groupes (81, 82).

2. Système de protection (1) selon la revendication 1 tel qu'il comprend une première fibre optique (10) qui est positionnée à proximité de toutes les spires (815) dudit premier groupe (81) et une seconde fibre optique (20) qui est positionnée à proximité de toutes les spires (825) dudit second groupe (82).

3. Système de protection (1) selon la revendication 1 ou 2 tel que ladite au moins une fibre optique (10, 20) est située en regard de l'extrémité longitudinale dudit groupe (81, 82) de spires (815, 825).

4. Système de protection (1) selon la revendication 1 ou 2 tel que ladite au moins une fibre optique (10, 20) s'étend le long de la périphérie radialement externe dudit groupe (81, 82) de spires (815, 825).

5. Système de protection (1) selon la revendication 1 ou 2 tel que ladite au moins une fibre optique (10, 20) s'étend le long de la périphérie radialement interne dudit groupe (81, 82) de spires (815, 825).

6. Système de protection (1) selon l'une quelconque des revendications 1 à 3 tel que ladite au moins une fibre optique (10, 20) est munie d'une gaine transparente.

7. Procédé de protection (1) contre un défaut électrique dans un stator (90) d'un moteur qui s'étend selon un axe longitudinal (X) avec une première extrémité longitudinale (91) et une seconde extrémité longitudinale (92) et qui comprend un premier groupe (81) de spires (815) de rebouclage à ladite première extrémité longitudinale (91) et un second groupe (82) de spires (825) de rebouclage à ladite seconde extrémité longitudinale (92), ledit procédé étant **caractérisé en ce qu'**il comporte les étapes suivantes :
(a) on positionne une fibre optique (10, 20) à proximité de toutes les spires (815, 825) de l'un desdits groupes (81, 82) de spires (815, 825), ladite fibre optique étant dépourvue de gaine opaque ;
(b) on connecte un premier déflecteur (31) à une première extrémité (11, 21) de ladite fibre optique (10, 20) et on connecte un second déflecteur (32) à une seconde extrémité (12, 22) de ladite fibre optique (10, 20) ;
(c) on connecte un capteur (40) auxdits déflecteurs (31, 32) et à une unité de commande (50) ;
(d) on coupe l'alimentation dudit moteur au moyen de ladite unité de commande (50) lorsque ladite au moins une fibre optique (10, 20) reçoit une lumière provenant de l'un desdits groupes (81, 82).

8. Procédé selon la revendication 7 **caractérisé en ce que**, à l'étape (a), on positionne une première fibre optique (10) à proximité de toutes les spires (815) dudit premier groupe (81) et on positionne une seconde fibre optique (20) à proximité de toutes les spires (825) dudit second groupe (82).
